Europäisches Patentamt

(19) European Patent Office

Office européen des brevets

(11) Publication number: **0 063 534**
**A2**

(12) # EUROPEAN PATENT APPLICATION

(21) Application number: 82630028.7

(22) Date of filing: 06.04.82

(51) Int. Cl.³: **C 09 J 3/16**
**C 08 G 18/10, C 08 G 18/32**

(30) Priority: 06.04.81 US 251457
06.04.81 US 251458

(43) Date of publication of application:
27.10.82 Bulletin 82/43

(84) Designated Contracting States:
DE FR GB IT

(71) Applicant: THE GOODYEAR TIRE & RUBBER COMPANY
1144 East Market Street
Akron, Ohio 44316(US)

(72) Inventor: Cline, Richard Lee
R D 5 Box 83
Ashland Ohio 44805(US)

(72) Inventor: Kimball, Michael Edward
948 State Route 302 R D 3
Ashland Ohio 44805(US)

(72) Inventor: Oswalt, Stephen Michael
Route 1 Box 328
Mansfield Ohio 44903(US)

(72) Inventor: Rabito, Thomas George
1507 Baney Road
Ashland Ohio 44805(US)

(72) Inventor: Randleman, Marvin Theodore
155 Williams Street
New London Ohio 44851(US)

(74) Representative: Weyland, Joseph Jean Pierre
Goodyear International Tire Technical Center Patent
Department Avenue Gordon Smith
L-7750 Colmar-Berg(LU)

(54) A sag resistant two component adhesive.

(57) An improved two component adhesive whereby said adhesive exhibits sag resistance on a vertical surface substantially immediately after the two components are mixed with adequate gel time for use thereof and said two component adhesive being composed of a polyurethane prepolymer component and curative components especially useful at a mix ratio of 4:1 and 1:2 to 2:1.

# A SAG RESISTANT TWO COMPONENT ADHESIVE

## Technical Field

This invention relates to improved two component adhesives composed of an isocyanate component and improved curative components that gives said adhesives satisfactory sag resistance at the specific isocyanate component to curative ratios of 1:2 to 2:1 to about 4:1 and some higher, the curative, preferably at the mix ratios of 1:2 to 2:1 being composed of a mixture of 0.01 to 0.1 equivalents of a polyamine having a molecular weight less than about 1000 and 0.1 to 1.0 equivalents of a hydroxyl terminated prepolymer resulting from reacting of 0.1 to 1.5 equivalents of a 100 to 3000 molecular weight polyol having 2 to 6 hydroxyls with 0.1 to 0.4 equivalents of an organic polyisocyanate and, at the mix ratio of about 4:1 and higher being a mixture of 0.5 to 5.0 mols of a polyamine having a molecular weight less than 750 and 5 to 15 mols of a reactive hydrogen containing material having 2 to 5 hydroxyls of 100 to 3000 molecular weight. The two component adhesive of this invention exhibits satisfactory sag resistance on a vertical surface substantially immediately after the two components are mixed at the ratios of isocyanate component to curative where the curative has the composition recited above and has adequate gel time and suitable viscosity for application of the adhesive.

More particularly, this invention provides curatives that can be used at different mix ratios and still yield satisfactory sag resistance.

## Background

Two component adhesive systems have been described in the patent literature, as represented particularly by U. S. Patent No. 3,812,003 and No. 3,935,051, as well as being available commercially for a decade or more from the adhesive suppliers. In general, these adhesives comprise a prepolymer component and a curative component which are generally mixed in ratios of about 4:1 or higher to give essentially a highly fluid mix unless

the mix is highly loaded with filler. Typically the prepolymer component is the reaction product of an organic polyisocyanate with a reactive hydrogen containing material containing mostly two hydroxyls and having a molecular weight of 500 to about 5000 or higher, preferably selected from the polyester polyols and the polyether polyols. The curative component preferably is a low molecular weight polyfunctional polyol preferably having three or more hydroxyls of relatively low equivalent weight. Also these adhesives generally contain sufficient urethane catalyst to give the desired gel time to permit the adhesive to be applied at least to the substrate before the adhesive gels. The prepolymer usually contains about 2 to about 10 percent and preferably 4 to about 7 percent by weight of free NCO.

Since these adhesives without filler inherently have low sag resistance those of ordinary skill in this art have incorporated fillers to develop or increase the sag resistance where said resistance is needed. Unfortunately, this technique also increases the viscosity of the component or components containing the filler and makes it more difficult to mix the components and then spread the adhesive on a substrate. Hence loading with high levels of filler needed to achieve sag resistance results in difficulties in getting satisfactory mixing because high pressure mixing or high shear equipment and high pressure pumping equipment is needed. Further, high loading in many cases tends to lower the strength of the adhesive bond and therefore is undesirable from that standpoint.

Disclosure and Practice of the Invention

This invention provides a two component adhesive and sealant characterized by exhibiting sag resistance immediately after the prepolymer component and the specific curative components are mixed in the specified ratios, i.e. about 4:1 ratio or higher to 1:2 to 2:1 and still has a viscosity low enough and a gel time sufficient to permit the adhesive to be applied readily to a surface and the coated surface to be placed in an adhering relationship with another surface when the polyurethane or prepolymer is the reaction product of an organic polyisocyanate and a reactive hydrogen containing material such as polyester polyols and/or polyether polyols of 300 to 3000 and up to about 6000, and preferably 1000 to 2000 molecular weight, with the urethane catalyst and filler, and curative component at 4:1 ratio is composed of a mixture of 0.1 to 1.0 mol of a reactive hydrogen containing material having at least two, and preferably three to six hydroxyls of 100 to 2000, and preferably 100 to 1000 molecular weight and 0.01 to 1.0, and preferably .04 to 0.4 mol of a polyamine having a molecular weight less than 100 and preferably the polyamine exhibits the ability to develop a turbidity with the isocyanate of the prepolymer by the hot methylene chloride test in 30 seconds and optionally any filler or catalyst that may be used.

More specifically, this invention in one embodiment provides a two component sag resistant adhesive that can be mixed at 1:2 to 2:1 ratio to give a gel time of 2 to 120 minutes at 24°C., relatively low viscosity and good bonding ability to metal and polyester substrates, said components being composed of a polyurethane prepolymer composition having 3 to 15 percent and preferably 7 to 10 percent free NCO on a weight basis and a curative component composed of a mixture of 0.1 to 1.0 equivalents of a hydroxyl terminated prepolymer formed by reacting 0.1 to 1.5 equivalents of 150 to 3000 molecular weight polyol having two, and preferably three to six, hydroxyls with 0.1 to 0.4 equivalents of an organic polyisocyanate and 0.01 to 0.1 equivalents of a polyamine, preferably one that develops a turbidity in the hot methylene chloride test with the isocyanate of the prepolymer within 30 seconds.

The prepolymer composition component is made in the well known manner such as described in the Newell R. Bender and William M. Larson U.S. patents No. 3,812,003 issued May 21, 1974 and No. 3,935,051 issued January 27, 1976 . where about 100 parts of a reactive hydrogen containing material having a molecular weight of 700 to 4500-6500 and preferably from about 1000 to 3500 is selected from the polyester amides, polyester polyols and the polyether polyols with about 30 to 120 parts of an organic polyisocyanate such as toluene diisocyanate, methane di(phenyl isocyanate) and polyaryl methane polyisocyanate preferably in the presence of about 5 to 200 parts of an inert powdery filler and a polyurethane catalyst of the metallic type such as the salts of tin, mercury and lead and the tertiary amines, such as triethylene diamine, trimethyl piperazine and the other well known tertiary amines.

Representative prepolymer components can be formed by reacting in the well known manner 1 to 2 mols of a reactive hydrogen material such as the polyester polyols or the polyether polyols of 300 to about 6000 molecular weight with about 2 to 5 mols of an organic polyisocyanate such as toluene diisocyanate, methane di(phenyl isocyanate) (MDI) and polyaryl methane polyisocyanate to form a prepolymer preferably at elevated temperatures after the polyol has been degassed under a vacuum. The polyol can have the catalyst, such as the well known urethane metallic catalysts of tin, lead and mercury and/or the tertiary amines, such as 1,2,4-trimethyl piperazine, or triethylene diamine incorporated therein prior to or during the reaction of the polyol and the organic polyisocyanate. The fillers, when used, are preferably inert powdery materials such as the representative carbon blacks and fine or powdery silicas. Usually the fillers are used in as small an amount as one to five parts and in as large amounts as 50 to 200 or more parts per 100 parts of the prepolymer. When it is desired to obtain a no-sag adhesive very large amounts of filler have been found to be desirable heretofore, but this invention gives a non-sag adhesive without the use of large loadings. A non-sag adhesive or sag-resistant adhesive is one when applied as a bead to a cardboard surface at a 45° angle to the horizontal does not exhibit creeping or sag of the bead before the adhesive sets or gels or as measured by ASTM method D2202.

Representative examples of useful reactive hydrogen containing materials are the polyester polyols such as a condensation product of a glycol or an ether glycol containing preferably 2 to about 12 carbon atoms with a dicarboxylic acid preferably of about 5 to about 12 carbon atoms and the polyether glycols obtained by condensing the alkylene oxides of 2 to about 12 carbon atoms to give products such as the polypropylene ether glycols, polytetramethylene ether glycols and poly-pentamethylene ether glycols. It should be appreciated that small amounts of polyester triol or tetraols or the polyether triols or tetraols can be used also.

A representative prepolymer can be formed by mixing and reacting a thoroughly degassed mixture of 100 parts of polypropylene glycol of about 2000 molecular weight, 60 parts of a filler, such as silicates of talc and clay, calcium carbonate, whiting, carbon black, etc. with 50 to 70 parts of toluene diisocyanate or methane di(phenyl isocyanate) or monomeric or polymeric type depending on the percent free isocyanate desired. Usually the reaction time at elevated temperature is chosen to give a prepolymer in one to several hours. These prepolymers usually have from 3 to 15 percent of free NCO with 7 to 10 percent being preferred.

Any of the organic polyisocyanates of the aromatic, aliphatic and cycloaliphatic type are useful in making the prepolymers, especially useful ones being the toluene diisocyanates, methylene di(phenyl isocyanate) (MDI), isophorone diisocyanates, tolyl diisocyanates, naphthalene diisocyanates, hydrogenated MDI and hexamethylene diisocyanates as well as those commercially available, including the polymeric polyisocyanates such as polymeric MDI and the quasi polyisocyanates.

As previously indicated, the curative component, at ratio of 4:1 and higher, comprises a mixture of a low molecular weight polyol containing at least two hydroxyls and usually three to six hydroxyls and a polyamine having a molecular weight of less than 1000 and preferably 50 to 120 and exhibiting the ability preferably to develop a turbidity within 30 seconds with the isocyanate of the prepolymers at half molar concentration by the hot methylene chloride test as disclosed in U. S. Patent No. 2,620,516. The diamines that meet the hot methylene chloride test are particularly suited to make the curative of this invention.

Some representative and preferred polyols for use in the curative are triethanolamine, diethanol aniline, N,N,N',N', tetrakis(2-hydroxypropyl) ethylene diamine and other condensation products of alkylene oxides of 2 to about 18 carbon atoms on an amine, preferably a diamine where the organic radical contains 2 to about 20 carbon atoms and normally called di or trialkanolamines as well as the usual low molecular weight diols, with some triols or tetraols.

The curative embodiment particularly useful at 1:2 to 2:1 ratio is a mixture of a relatively low equivalent weight reactive hydrogen containing material which has been partially reacted with an organic polyisocyanate preferably prior to the time the polyamine is added. The diamine preferably is one that reacts with the organic polyisocyanate, used to make the prepolymer to yield a turbidity within 30 seconds in the hot methylene chloride test at about 0.5 semimolar concentration as described in U. S. Patent No. 2,620,516.

Exemplary of these polyamines are the diamines, the triamines, tetramines and related polymeric amines where the polyamine contains 2, 3, 4 or more nitrogen atoms. Some specific examples of useful diamines are hydrazine, ethylene diamine, propylene diamine, butylene diamine, amylene diamine, hexylene diamine, toluene diamine, isophorone diamine and methane dianiline, to name a few of the well known materials.

0063534

-7-

The nature of this invention can be seen more readily and appreciated by reference to the following representative examples where all the parts and percentages are by weight unless otherwise indicated.

## EXAMPLE 1

A prepolymer was made by charging 100 parts of a polypropylene ether glycol of approximately 2000 molecular weight to a reactor equipped with a stirrer and having connection to a vacuum apparatus.

Thirty (30) parts of polymeric methylene di(phenyl isocyanate), also referred to in the trade as polymeric MDI, of about 2.7 functionality, 33 parts of commercial toluene diisocyanate and 64 parts of talc were added and reacted at 50 to 80°C. with stirring and under vacuum until the prepolymer had a free NCO of about 9 to 8.5 percent.

## EXAMPLE 2

The curative component No. 1 was prepared by mixing the ingredients in the order listed in the following recipe.

| Ingredient | Parts |
|---|---|
| Polypropylene ether tetraol of 125 equivalent weight | 400.0 |
| Silica, fumed | 44.0 |
| Triethylene diamine | 1.0 |
| Ethylene diamine | 2.1 |

The curative component No. 2 was prepared with the above recipe except the ethylene diamine was replaced with sufficient methylene dianiline to give it a concentration of 0.5 percent on a weight basis. Also other curative components were made having methylene dianiline concentrations of 1.0 percent and 2.0 percent by increasing the amount of methylene dianiline in the above recipe. These curatives were labeled curative components No. 3 and No. 4 respectively.

Curative components Nos. 5, 6 and 7 were made using the recipe set forth above except the ethylene diamine was replaced with sufficient isophorone diamine to give a curative containing respectively 0.5 percent, 1.0 percent and 2.0 percent of isophorone diamine.

## EXAMPLE 3

A series of hand mixes were made by mixing in a cup the prepolymer component with the curative component at a ratio of 4:1 on a weight basis to form the adhesive made with the curative components Nos. 1 through 7 and a control curative component made with the above recipe except the diamine was omitted. The results of these measurements are listed in Table I as the average of three runs, identified by the diamine of the curative component.

### TABLE I

| Adhesive | * Viscosity Centipoises | Thixotropic** Time - Minutes | Gel Time Minutes |
|---|---|---|---|
| Control, no polyamine | 12,800 | 3.22 | 4.39 |
| Ethylene diamine 0.5% | 10,500 | 2.69 | 4.84 |
| Ethylene diamine 1.0% | 10,200 | 2.68 | 3.58 |
| Methane dianiline 0.5% | 11,000 | 1.80 | 2.77 |
| Methane dianiline 1.0% | 10,900 | 1.58 | 2.85 |
| Methane dianiline 2.0% | 11,200 | 1.87 | 3.03 |
| Isophorone diamine 0.5% | 9,800 | 1.89 | 2.94 |
| Isophorone diamine 1.0% | 10,000 | 1.68 | 2.21 |
| Isophorone diamine 2.0% | 10,100 | 1.17 | 1.62 |

\* These viscosity values were measured in the curative component with a Brookfield Viscometer at 25° C. with a No. 6 spindle and 10 rpm.

\*\* Thixotropic time includes mix time.

The viscosity of the curative of this invention is lower or essentially the same as the control yet the adhesive develops sufficient thixotropic properties to prevent sag and has sufficient open time to be used on an assembly line for making laminates.

## EXAMPLE 4

The prepolymer of Example 1 and the curative component No. 1 of Example 2 were mixed in a ratio of 4:1 in a standard adhesive two component dispensing apparatus to yield an adhesive A. Adhesive A was used to lay a bead on a 45° cardboard surface to determine sag resistance, or according to ASTM Method D2202 and also was used to prepare laminates with various substrates where the substrates are placed together to form a cross and then cured.

A control adhesive was prepared with the same prepolymer and the control curative at 4:1 ratio in the same manner to give an adhesive according to prior art teachings. Adhesive A had a thixotropic time of 1.5 minutes and a gel time of 5 minutes whereas adhesive B had a thixotropic time of 3.5 minutes and a gel time of 5 minutes. Adhesive A showed no sign of run or sag in the sag test whereas adhesive B, the control, exhibited appreciable sag or run.

The laminates were tested at the temperature indicated for bond strength by subjecting them to a pull to failure of the laminate. These test results are shown in Table II.

TABLE II

| Temperature | Substrate of Laminates | Adhesive A Bond Failure | Adhesive B Bond Failure |
|---|---|---|---|
| Room | SMC - SMC | 500 - 600 psi Delaminated | 500 - 600 psi Delaminated |
| Room | Metal - Metal | 2750 psi Cohesive | 2500 psi Cohesive |
| 83° C. | SMC - SMC | 350 psi Mixed | 250 psi Cohesive |
| 83°C. | Metal - Metal | 400 psi Cohesive | 250 psi Cohesive |

In the above Table, SMC designates polyester fiberglass substrates and the metal substrates are cold rolled steel primed with a phenolic primer as supplied commercially for bond tests. The term "delaminate" means the test specimen failed in the polyester fiberglass substrate. "Cohesive" means the adhesive failed, and "Mixed" indicates both modes of failure. These data indicate adhesive A gives better bond strength at elevated temperatures than adhesive B.

The diamines of the examples can be replaced with triamine or tetramines, i.e. those having three or
four nitrogen atoms, to give an adhesive having improved
sag resistance. Also the diamines of the examples can be
replaced with hydrazine, toluene diamine, propylene
diamines, butylene diamine, amylene diamine and hexylene
diamines and satisfactory non-sag adhesives are obtained.

In the preferred embodiment of preparing the curative
in the 1:2 to 2:1 ratio the reactive hydrogen containing
material, the organic polyisocyanate and any filler used
is mixed in the reactor and heated to about 60° C. for
about one hour before a vacuum is applied. After three
hours, the diamine is added and the mixture is cooled
to about 37° C. and thus is ready for use in preparing
the adhesive. A preferred curative recipe is as follows:

| Ingredient | Parts |
|---|---|
| Tripropylene ether glycol | 288 |
| Polypropylene ether glycol, 2000 molecular weight | 1000 |
| Polypropylene ether triol, 3500 molecular weight | 1167 |
| Toluene diisocyanate | 222 |
| Talc filler | 2000 |
| Polypropylene tetraol 125 equivalent weight | 1125 |
| Ethylene diamine | 290 |

The first five ingredients of the above recipe were
added to the reactor and mixed as the contents were heated
to 60°C. for one hour. A vacuum was pulled on the reactor
for three hours before the last two ingredients were
added and the contents of the reactor cooled to 37°C.
This curative had a low viscosity of about 50,000 centipoises as measured by the Brookfield Viscometer at 25°C.
with #6 spindle at 10 rpm.

The prepolymer componenet and the curative component
are mixed in a ratio of 1:2 to 2:1 to obtain the
adhesive. These adhesives have good open times up to
two hours but cure rapidly at 120° to 150° C. in 5 to
10 minutes. Also these adhesives will cure at room
temperature in 10 to 20 hours. Thus the adhesives can
be used to achieve energy saving yet the adhesive provides
a bond that exhibits good temperature properties at 230° C. whereas the prior adhesive properties begin to fade as 200° C. is approached. These adhesive bonds in lap shear bond tests exhibit bond strengths in excess of 300 psi (2.0 MPa) with polyester fiberglass test specimens. Since the components are low in viscosity, they are readily pumpable and mixed at 1:2 to 2:1 ratio to yield an adhesive that immediately, viz 2 to 3 minutes, exhibits pseudothixotropic properties without the need to use the normal urethane catalyst to get the desired gel time.

## EXAMPLE 5

A prepolymer was made by adding 100 parts of polypropylene ether glycol of 2000 molecular weight in a reactor equipped with a heater, a stirrer and vacuum equipment. The polypropylene ether glycol was heated sufficiently to permit the stirrer to readily operate and sufficient vacuum was drawn to degas the stirred contents of the reactor. Then 31 parts of a polymeric methylene di(phenyl isocyanate) and 45 parts of flaked methylene di(phenyl isocyanate) along with 46 parts of talc were added to the reactor. The isocyanate was reacted until the free NCO content of the prepolymer was 9.2 percent by weight. This prepolymer had a Brookfield viscosity as measured at 25° C. and at a speed of 10 rpm with a #6 spindle of 35,000 centipoises. This prepolymer could be mixed with curatives, preferably at 1:1 ratio although in ratios of 2:1 and higher can be used to advantage in preparation of some adhesives.

## EXAMPLE 6

A curative was prepared by charging 116.7 parts of polypropylene ether glycol of 3000 molecular weight, 20 parts polypropylene tetraol of 125 gram/equivalent weight and 85 parts of talc to a reactor equipped with a heater, stirrer and vacuum apparatus. The contents of the reactor were heated and stirred under a vacuum to degas the mass. Then 70 parts of polyaryl methane polyisocyanate was added and reacted before 2.0 parts of ethylene diamine was added and thoroughly mixed with the contents of the

-12-

reactor.

This curative had a Brookfield viscosity as measured at 25° C. and at a speed of 10 rpm with a #6 spindle of 55,000 centipoises.

## EXAMPLE 7

The prepolymer component of Example 1 was mixed with the curative component of Example 6 at ratios of 1:1 and 2:1 to give adhesives that functioned satisfactorily to adhere polyester impregnated fiberglass panels together and had satisfactory sag properties for use in commercial operations. Also the open time was about 120 minutes.

Typical bond strength at bond failure on cross bonded laminated substances at room temperature was as follows:

Cold roll steel, phenolic resin primed substrates,
750 psi (5.17 MPa) - Cohesive failure
Standard SMC specimen (polyester fiberglass impregnated),
300 - 500 psi (2.0 - 3.4 MPa) -
Cohesive and substrate failure.

Instead of ethylene diamine other polyamines such as propylene diamine, hydrazine, butylene diamine, isophorone diamine, toluene diamine and methane dianiline may be used satisfactorily in the above recipes. Also the other organic polyisocyanates may be used.

While certain representative embodiments and details have been shown for the purpose of illustrating the invention it will be apparent to those skilled in this art that various changes and modifications may be made therein without departing from the spirit or scope of the invention.

## Claims

1. A curative for a two component adhesive composed of an isocyanate component and said curative that gives said adhesive satisfactory sag resistance of an isocyanate component to curative ratios of 1:2 to 2:1 and about 4:1 and some higher, characterized by said curative (1), at the mix ratios of 1:2 to 2:1 being composed of a mixture of 0.01 to 0.1 equivalents of a polyamine and 0.1 to 1.0 equivalents of a polyol with 0.1 to 0.4 equivalents of an organic polyisocyanate, and (2) at the mix ratios of about 4:1 being composed of a mixture of 0.5 to 3.0 mols of a polyamine and 5 to 15 mols of polyol, said polyamine having a molecular weight less than 1000 and the polyols having from 2 to 5 hydroxyls and molecular weight of 100 to 3000.